# EUROPEAN PATENT SPECIFICATION

(11) **EP 3 076 469 B1**
(45) Date of publication and mention of the grant of the patent: **22.11.2017**
(21) Application number: 16157791.1
(22) Date of filing: 29.02.2016
(51) Int. Cl.: H01M 4/36, H01M 4/62, H01M 4/48, H01M 4/52, H01M 4/131, H01M 10/0525, H01M 10/0562

(54) **BATTERY AND POSITIVE ELETRODE MATERIAL**
BATTERIE UND POSITIVES ELEKTRODENMATERIAL
BATTERIE ET MATÉRIAU D'ÉLECTRODE POSITIVE

(30) Priority: 02.04.2015 JP 2015076044
(43) Date of publication of application: 05.10.2016
(73) Proprietor: Panasonic Intellectual Property Management Co., Ltd., Osaka-shi, Osaka 540-6207 (JP)
(72) Inventor: IWAMOTO, Kazuya, Osaka, 540-6207 (JP)
(74) Representative: Eisenführ Speiser

(56) References cited:
- JP-A- 2001 052 733
- JP-A- 2014 022 204
- US-A1- 2009 075 165
- US-B1- 6 183 911
- US-B2- 8 785 045
- PRALONG ET AL: "Lithium intercalation into transition metal oxides: A route to generate new ordered rock salt type structure", PROGRESS IN SOLID STATE CHEMISTRY, PERGAMON PRESS, OXFORD, GB, vol. 37, no. 4, 15 December 2009 (2009-12-15), pages 262-277, XP027427549, ISSN: 0079-6786, DOI: 10.1016/J.PROGSOLIDSTCHEM.2010.08.002 [retrieved on 2010-09-24]

## Description

### BACKGROUND

### 1. Technical Field

The present disclosure relates to a battery and a positive electrode material for a battery.

### 2. Description of the Related Art

Japanese Unexamined Patent Application Publication No. 2014-22204 has disclosed a lithium ion secondary battery which includes an active material covered with a covering layer formed of a glass containing vanadium and at least one of phosphorus and tellurium.

US6183911 discloses a positive electrode for a lithium battery comprising a core particle of a transition metal oxide absorbing and releasing lithium ions covered by a layer of vanadium pentoxide (V₂O₅).

### SUMMARY

In related techniques, further improvement in charge/discharge characteristics has been desired.

In one general aspect, the techniques disclosed here feature a battery comprising: a positive electrode containing a positive electrode material; as disclosed in claim 1 a negative electrode; and a solid electrolyte. In the battery described above, the solid electrolyte is provided between the positive electrode and the negative electrode, the positive electrode material contains a positive electrode active material particle and a covering layer covering the positive electrode active material particle, the positive electrode active material particle contains a transition metal oxide which absorbs and releases a lithium ion, the covering layer is a layer containing lithium, vanadium and oxygen, and the covering layer is in contact with the solid electrolyte.

According to the present disclosure, a battery having improved charge/discharge characteristics can be realized. Additional benefits and advantages of the disclosed embodiments will be apparent from the specification and drawings. The benefits and/or advantages may be individually provided by the various embodiments and features of the specification and drawings, and need not all be provided in order to obtain one or more of the same.

### BRIEF DESCRIPTION OF THE DRAWINGS

Fig. 1 is a schematic view showing the structure of a positive electrode material of an embodiment 1;
Fig. 2 is a schematic view showing the structure of a positive electrode material of an embodiment 2;
Fig. 3 is a schematic view showing the structure of a positive electrode material of an embodiment 3;
Fig. 4 is a schematic view showing the structure of a power generation element which is one example of a battery of an embodiment 4; and
Fig. 5 is a schematic view illustrating a process for manufacturing the power generation element.

### DETAILED DESCRIPTION

Hereinafter, embodiments of the present disclosure will be described with reference to the drawings.

### (Embodiment 1)

### - not according to the invention

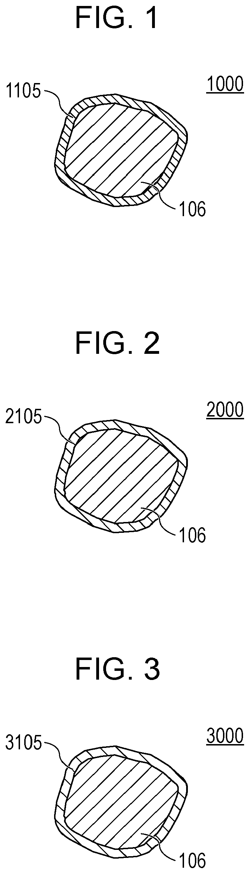

Fig. 1 is a schematic view showing the structure of a positive electrode material 1000 of an embodiment 1.

The positive electrode material 1000 of the embodiment 1 includes a positive electrode active material particle 106 and a covering layer 1105.

The covering layer 1105 is a layer covering the positive electrode active material particle 106.

The positive electrode active material particle 106 contains a transition metal oxide which absorbs and releases lithium ions.

The covering layer 1105 is a layer substantially formed of only vanadium and oxygen.

According to the structure described above, a battery having improved charge/discharge characteristics can be realized. In more particular, by the use of the positive electrode material of the embodiment 1, the impedance of the interface between a solid electrolyte and a positive electrode active material can be reduced. As a result, the charge/discharge efficiency, the charge capacity, or the discharge capacity of the battery (such as an all-solid lithium secondary battery) can be improved.

In addition, "substantially formed of only vanadium and oxygen" indicates "containing, besides inevitably contained impurities, only vanadium and oxygen". Hereinafter, a similar expression represents the same meaning as described above.

In addition, in the positive electrode material 1000 of the embodiment 1, the covering layer 1105 may be a layer substantially formed of only vanadium, oxygen, and lithium.

According to the structure described above, a battery in which the charge capacity or the discharge capacity is further improved can be realized.

In addition, in the positive electrode material 1000 of the embodiment 1, the covering layer 1105 may be a layer substantially formed of only a compound represented by the general formula of LiₓV₂O₅. In the above formula, 0≤x≤1 is satisfied.

According to the structure described above, a battery in which the charge/discharge characteristics are further improved can be realized.

In addition, in the positive electrode material 1000 of the embodiment 1, the covering layer 1105 may be a layer substantially formed of only a compound represented by the general formula of Li₁V₂O₅.

According to the structure described above, a battery in which the charge capacity or the discharge capacity is further improved can be realized.

In addition, in the positive electrode material 1000 of the embodiment 1, the covering layer 1105 may be a layer substantially formed of only a compound represented by the general formula of V₂O₅.

According to the structure described above, a battery in which the charge/discharge characteristics are further improved can be realized.

In addition, in the positive electrode material 1000 of the embodiment 1, the covering layer 1105 may be a layer substantially formed of only a compound represented by the general formula of Li_{y}V₆O₁₃. In the above formula, 0≤y≤3 is satisfied.

According to the structure described above, a battery in which the charge/discharge characteristics are further improved can be realized.

In addition, in the positive electrode material 1000 of the embodiment 1, the covering layer 1105 may be a layer substantially formed of only a compound represented by the general formula of Li₃V₆O₁₃.

According to the structure described above, a battery in which the charge/discharge characteristics are further improved can be realized.

In addition, as the transition metal oxide used in the positive electrode material 1000 of the embodiment 1, for example, LiCoO₂, LiNiO₂, LiMn₂O₄, LiCoPO₄, LiMnPO₄, LiFePO₄, and LiNiPO₄ may be mentioned. Alternatively, as the transition metal oxide, for example, a compound obtained, for example, by substituting the transition metal of the compound mentioned above with one or two foreign elements may also be mentioned. For example, as the compound described above, LiNi_{1/3}Co_{1/3}Mn_{1/3}O₂, LiNi_{0.8}Co_{0.15}Al_{0.05}O₂, and LiNi_{0.5}Mn_{1.5}O₂ may be mentioned.

### <Method for Manufacturing Positive electrode Material 1000>

The positive electrode material 1000 may be formed, for example, by the following method.

First, a precursor solution is prepared. For example, a dehydrated alcohol solution of a vanadium alkoxide functioning as a raw material of the covering layer 1105 is used.

As the vanadium alkoxide, for example, known alkoxides, such as vanadium trimethoxideoxide, vanadium (V) triethoxideoxide, vanadium tri-i-propoxideoxide, vanadium tri-n-propoxideoxide, vanadium tri-i-butoxideoxide, vanadium tri-n-butoxideoxide, vanadium tri-sec-butoxideoxide, and vanadium tri-t-butoxideoxide, may be used.

In addition, when lithium is also contained in the covering layer 1105, a dehydrated alcohol solution of alkoxides of lithium and vanadium is used.

As the alkoxide of lithium, for example, known lithium alkoxides, such as lithium methoxide, lithium ethoxide, lithium i-propoxide, lithium n-propoxide, lithium i-butoxide, lithium n-butoxide, lithium sec-butoxide, and lithium t-butoxide, may be used.

Metal lithium is used after dissolved in a known alcohol, such as dehydrated methanol, ethanol, isopropyl alcohol, or butanol.

In the precursor solution, an alkoxide in an amount necessary to obtain a desired thickness of the covering layer 1105 is contained. That is, by adjusting the amount of the alkoxide, the thickness of the covering layer may be adjusted.

In addition, in the precursor solution, an excessive amount of a dehydrated alcohol is contained.

Hereinafter, as one example, a manufacturing method using a dehydrated alcohol solution of alkoxides of lithium and vanadium will be described.

The reason an excessive amount of a dehydrated alcohol is contained in the precursor solution is as follows.

That is, the amount of the alkoxides of lithium and vanadium necessary to form a covering layer 1105 having a nanometer-order thickness is extremely small. Hence, this extremely small amount of the alkoxides is not easily mixed uniformly with the whole powder of a positive electrode active material containing a transition metal oxide. Hence, the alkoxides are diluted with a dehydrated alcohol in an amount which is sufficient to wet the whole powder of the positive electrode active material. Accordingly, the precursor can be uniformly adhered onto the surfaces of the particles of the positive electrode active material. Hence, a covering layer 1105 having a uniform thickness can be formed on the surface of the particle of the positive electrode active material.

In addition, the reason a dehydrated alcohol is used is as follows.

That is, when the alkoxides of lithium and vanadium are brought into contact with moisture, hydrolysis starts. As a result, a precipitate is liable to be generated in a liquid phase. Hence, until the precursor is mixed with the positive electrode active material, in order to prevent moisture from being brought into contact with the precursor solution, a dehydrated alcohol is used.

Next, while the precursor solution is added little by little to the particles of the positive electrode active material, stirring and mixing are performed. In addition, by a BET method or the like, the specific surface area of the particles of the positive electrode active material may be measured in advance. The precursor solution is added to all the particles of the positive electrode active material.

Subsequently, until the state in which the particles are dried is confirmed by visual inspection, the liquid component is evaporated while the solution is stirred on a hot plate.

Accordingly, the precursor is adhered onto the surface of each particle of the positive electrode active material. That is, the positive electrode active material particle is covered with the precursor.

The temperature of the solution (that is, the setting temperature of the hot plate) at which the liquid component is evaporated may be appropriately set in accordance with the solvent. However, when the solution is heated to a temperature higher than the boiling point of the solvent, the solution may be bumped and scattered in some cases. As a result, the ratio of raw materials to be charged may be changed in some cases. Hence, the setting temperature is preferably the boiling point of the solvent or less.

Next, in order to break agglomeration of the particles, blocks thereof are crushed using a mortar or the like.

The operations described above are preferably performed in a low dew point environment (for example, in a dew point environment at -40°C or less). In an atmosphere at a high dew point, the alkoxides of lithium and vanadium start hydrolysis by contact with moisture. As a result, a precipitate may be generated in a liquid phase in some cases. Hence, in an atmosphere at a low dew point, the solvent is preferably evaporated and removed while the precursor is suppressed from being converted into a vanadium-based compound as much as possible.

Next, on the surface of each positive electrode active material particle, the precursor containing the alkoxides of lithium and vanadium is converted into a vanadium-based compound.

When the particles of the positive electrode active material are processed by a heat treatment, the precursor containing the alkoxides of lithium and vanadium can be converted into a vanadium-based compound within a short time.

In order to covert the precursor containing the alkoxides of lithium and vanadium into a vanadium-based compound, moisture and oxygen are required. Hence, the atmosphere of the heat treatment is a wet atmosphere in which oxygen and moisture are present. As the wet atmosphere, for example, the air atmosphere may be mentioned.

As one example, under the condition in which "in the air atmosphere, the wet atmosphere temperature is150°C to 450°C, and the time is 0.5 to 2 hours", the heat treatment may be performed on the particles of the positive electrode active material.

Next, blocks of the particles obtained after the heat treatment are crushed and broken into the particles.

By the process described above, the positive electrode active material particles covered with the covering layers 1105 can be obtained.

### - according to the invention

Hereinafter, a second embodiment 2 will be described. Descriptions duplicated with those of the above embodiment 1 will be appropriately omitted.

Fig. 2 is a schematic view showing the structure of a positive electrode material 2000 of the embodiment 2.

The positive electrode material 2000 of the embodiment 2 includes a positive electrode active material particle 106 and a covering layer 2105.

The covering layer 2105 is a layer covering the positive electrode active material particle 106.

The positive electrode active material particle 106 contains a transition metal oxide which absorbs and releases lithium ions.

The covering layer 2105 is a layer containing a compound represented by the general formula of LiₓV₂O₅.

In the above formula, 0<x≤1 is satisfied.

According to the structure described above, a battery having improved charge/discharge characteristics can be realized.

In addition, in the positive electrode material 2000 of the embodiment 2, the covering layer 2105 may be a layer containing a compound represented by the general formula of Li₁V₂O₅.

According to the structure described above, a battery having improved charge/discharge characteristics can be realized.

In the embodiment 2, the covering layer 2105 may further contain a predetermined additive besides vanadium, oxygen, and lithium.

As the additive, for example, an electron conductive material (such as graphite) may be mentioned.

In addition, in the battery electrode material 2000 of the embodiment 2, the covering layer 2105 covering the positive electrode active material particle 106 may contain the compound represented by the general formula of LiₓV₂O₅ at a weight rate of 0.4 percent by weight or more with respect to the total of the covering layer 2105 covering the positive electrode active material particle 106.

According to the structure described above, a battery in which the charge/discharge characteristics are further improved can be realized.

By a manufacturing method similar to the manufacturing method of the positive electrode material 1000 of the embodiment 1 described above, the positive electrode material 2000 of the second embodiment 2 can be manufactured. That is, for example, the predetermined additive may be contained in the precursor solution used in the manufacturing method of the positive electrode material 1000 of the embodiment 1 described above. Accordingly, the covering layer 2105 containing the predetermined additive can be formed on the surface of the positive electrode active material particle 106.

### (Embodiment 3)

### - not according to the invention

Hereinafter, a third embodiment 3 will be described. Descriptions duplicated with those of the above embodiment 1 will be appropriately omitted.

Fig. 3 is a schematic view showing the structure of a positive electrode material 3000 of the embodiment 3.

The positive electrode material 3000 of the embodiment 3 includes a positive electrode active material particle 106 and a covering layer 3105.

The covering layer 3105 is a layer covering the positive electrode active material particle 106.

The positive electrode active material particle 106 contains a transition metal oxide which absorbs and releases lithium ions.

The covering layer 3105 is a layer containing a compound represented by the general formula of Li_{y}V₆O₁₃.

In the above formula, 0≤y≤3 is satisfied.

According to the structure described above, a battery having improved charge/discharge characteristics can be realized.

In addition, in the positive electrode material 3000 of the embodiment 3, the covering layer 3105 may be a layer containing a compound represented by the general formula of Li₃V₆O₁₃.

According to the structure described above, a battery having improved charge/discharge characteristics can be realized.

In the embodiment 3, the covering layer 3105 may further contain a predetermined additive besides vanadium, oxygen, and lithium.

As the additive, for example, an electron conductive material (such as graphite) may be mentioned.

In addition, in the positive electrode material 3000 of the embodiment 3, the covering layer 3105 covering the positive electrode active material particle 106 may contain the compound represented by the general formula of Li_{y}V₆O₁₃ at a weight rate of 0.4 percent by weight or more with respect to the total of the covering layer 3105 covering the positive electrode active material particle 106.

According to the structure described above, a battery having further improved charge/discharge characteristics can be realized.

By a manufacturing method similar to the manufacturing method of the positive electrode material 1000 of the embodiment 1 described above, the positive electrode material 3000 of the third embodiment 3 can be manufactured. That is, for example, the predetermined additive may be contained in the precursor solution used in the manufacturing method of the positive electrode material 1000 of the embodiment 1 described above. Accordingly, the covering layer 3105 containing the predetermined additive can be formed on the surface of the positive electrode active material particle 106.

In addition, in the above embodiments 1 to 3, the thickness of the covering layer may be 2 nm or more. When the average thickness of the covering layer is less than 2 nm, since uniform covering may not be easily performed, a significant covering effect may not be obtained in some cases.

Furthermore, in the above embodiments 1 to 3, the thickness of the covering layer may be 20 nm or less. When the average thickness of the covering layer is more than 20 nm, since the resistance thereof is increased, degradation of output characteristics may probably occur.

### (Embodiment 4)

Hereinafter, a fourth embodiment 4 will be described. Descriptions duplicated with those of the above embodiments 1 to 3 will be appropriately omitted.

A battery of the embodiment 4 is a battery (such as an all-solid lithium secondary battery) formed using any one of the positive electrode materials described in the above embodiments 1 to 3.

The battery of the embodiment 4 includes a positive electrode, a negative electrode, and a solid electrolyte.

The positive electrode contains any one of the positive electrode material 1000 described in the above embodiment 1, the positive electrode material 2000 described in the above embodiment 2, and the positive electrode material 3000 described in the above embodiment 3.

The solid electrolyte is provided between the positive electrode and the negative electrode.

The covering layer 105 is in contact with the solid electrolyte.

According to the structure described above, the charge/discharge characteristics of the battery can be improved. In more particular, by the use of the positive electrode material of the embodiment 1, the impedance of the interface between the solid electrolyte and the positive electrode active material can be reduced. As a result, the charge/discharge efficiency, the charge capacity, or the discharge capacity of the battery (such as an all-solid lithium secondary battery) can be improved.

In addition, in the battery of the embodiment 4, the solid electrolyte may also contain lithium and sulfur.

According to the structure described above, the charge/discharge characteristics of the battery can be improved.

In addition, in the battery of the embodiment 4, the solid electrolyte may contain Li₂S and P₂S₅.

According to the structure described above, the charge capacity or the discharge capacity of the battery can be further improved.

In the battery of the embodiment 4, as the solid electrolyte, a sulfide-based solid electrolyte containing lithium and sulfur may be used. As the sulfide-based solid electrolyte, for example, a Li₂S-P₂S₅-based glass, a Li₂S-SiS₂-based glass, a Li₂S-B₂S₃-based glass, L_{13.25}Ge_{0.25}P_{0.75}S₄, and Li₁₀GeP₂S1₂ may be mentioned. In addition, a solid electrolyte obtained by adding LiI, LₓMO_{y} (M: P, Si, Ge, B, Al, Ga, or In, x and y: natural number), or the like as an additive agent to the solid electrolyte mentioned above may also be used.

As one example of a method for manufacturing the solid electrolyte of the embodiment 4, a method for manufacturing a Li₂S-P₂S₅ glass ceramic solid electrolyte will be described below.

First, particles of lithium sulfide (Li₂S) and particles of phosphorous pentasulfide (P₂S₅) are mixed together at a weight ratio of 80: 20 to 70: 30. However, the mixing ratio between the particles described above is not particularly limited.

Subsequently, by a mechanical milling method using a planetary ball mill, a sulfide-based solid electrolyte containing Li₂S is synthesized. The mechanical milling method can be performed at 200 to 600 rpm for 5 to 24 hours.

Accordingly, particles of a Li₂S-P₂S₅ glass solid electrolyte can be obtained.

After the mechanical milling is performed, under the condition in which "in an inert atmosphere, the temperature is 200°C to 300°C, and the time is 1 to 10 hours", annealing is performed on the particles of the Li₂S-P₂S₅ glass solid electrolyte.

Accordingly, particles of the Li₂S-P₂S₅ glass ceramic solid electrolyte are obtained.

The method for synthesizing a sulfide-based solid electrolyte is not limited to the mechanical milling method. By other methods, such as a fusion super-rapid cooling method and a sealed tube method, a sulfide-based solid electrolyte may also be synthesized. In the fusion super-rapid cooling method, after raw materials are fused, the fused product thus obtained is allowed to pass through between two rollers or is brought into contact with liquid nitrogen, so that rapid cooling is performed. In the sealed tube method, after raw materials charged in a quartz tube is vacuumed and then sealed, a heat treatment is performed.

Alternatively, in the case of the battery of the embodiment 4, as the solid electrolyte, an oxide-based solid electrolyte may also be used. As the oxide-based solid electrolyte, for example, there may be mentioned a NASICON type solid electrolyte, such as LiTi₂(PO₄)₃ or its element substitution compound, a (LaLi)TiO₃-based perovskite type solid electrolyte, a LISICON type solid electrolyte, such as Li₁₄ZnGe₄O₁₆, Li₄SiO₄, LiGeO₄, or its element substitution compound, a garnet type solid electrolyte, such as Li₇La₃Zr₂O₁₂ or its element substitution compound, Li₃N or its H substitution compound, or Li₃PO₄ or its N substitution compound.

In the battery of the embodiment 4, the positive electrode may contain a positive electrode mixture which will be described below.

The positive electrode mixture is formed, for example, of particles of a solid electrolyte and particles of a positive electrode active material.

After the particles of the positive electrode material described in one of the embodiments 1 to 3 and the particles of the above solid electrolyte are weighed in predetermined amounts, mixing thereof is sufficiently performed. Accordingly, the positive electrode mixture is obtained. In addition, the mixing ratio is not particularly limited. The mixing ratio of the positive electrode material to the solid electrolyte may be set, for example, to 5: 5 to 9: 1 on the weight basis.

As a mixing method, a known mixing method may be used. For example, a mixing method using a mortar, a mixing method using a ball mill or a bead mill, or a mixing method using a jet mill may be used. As the mixing method, either a dry method or a wet method may be used. In the wet mixing method, a liquid must be used which is not allowed to react with a vanadium-based compound, a lithium-containing transition metal oxide, and a sulfide-based solid electrolyte containing lithium and sulfur. In addition, as the liquid used for the wet mixing method, a liquid from which moisture is sufficiently removed must be used. As the example of the liquid described above, dehydrated toluene, dehydrated xylene, and dehydrated hexane may be mentioned. However, as long as the conditions described above are satisfied, a liquid to be used for the wet mixing method is not limited to dehydrated toluene, dehydrated xylene, and dehydrated hexane.

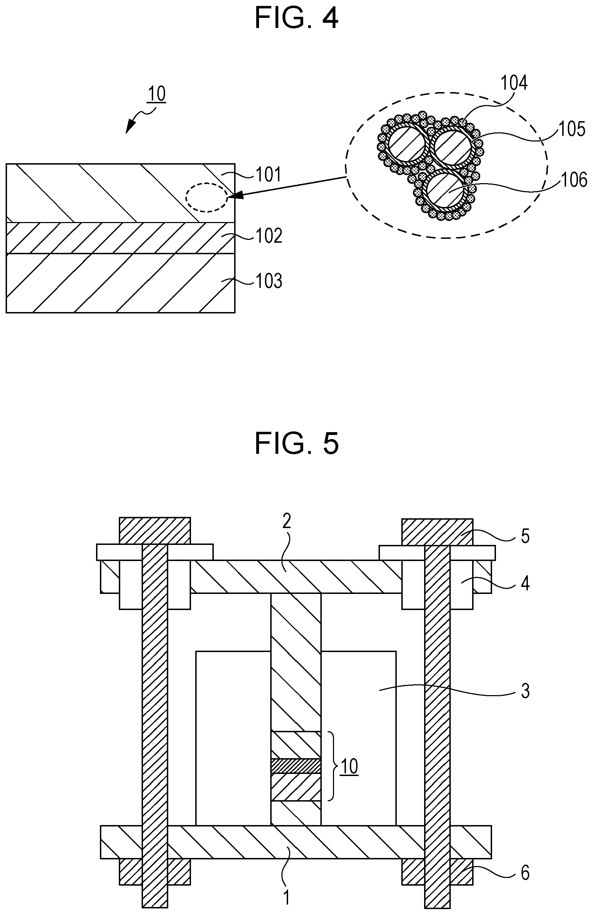

Fig. 4 is a schematic view showing the structure of a power generation element 10 which is one example of the battery of the embodiment 4.

The example shown in Fig. 4 is an all-solid lithium secondary battery using a sulfide-based solid electrolyte.

As shown in Fig. 4, the power generation element 10 includes a positive electrode mixture layer 101 (positive electrode), a solid electrolyte layer 102, and metal indium foil (negative electrode layer 103).

The solid electrolyte layer 102 is disposed between the positive electrode mixture layer 101 and the negative electrode layer 103. The solid electrolyte layer 102 is in contact with the positive electrode mixture layer 101 and the negative electrode layer 103.

The positive electrode mixture layer 101 is formed of sulfide-based solid electrolyte particles 104 and positive electrode active material particles 106 of a lithium-containing transition metal oxide.

The surface of each of the positive electrode active material particles 106 is covered with a vanadium-based compound film (covering layer 105).

In addition, the surface of the positive electrode active material particle 106 may be partially covered with the vanadium-based compound film (covering layer 105). Alternatively, the surface of the positive electrode active material particle 106 may be entirely covered with the vanadium-based compound film (covering layer 105).

In the example shown in Fig. 4, the positive electrode active material particle 106 covered with the vanadium-based compound film (covering layer 105) has a relatively large particle diameter (average particle diameter). The solid electrolyte particle 104 has a relatively small particle diameter (average particle diameter). One positive electrode active material particle 106 is surrounded by a plurality of solid electrolyte particles 104. That is, besides the positive electrode active material particle 106, the solid electrolyte particles 104 are also in contact with the vanadium-based compound film. The solid electrolyte particles 104 may have an average particle diameter of, for example, several tens of nanometers to one micrometer. The positive electrode active material particles 106 may have an average particle diameter of, for example, 1 to 20 µm.

In addition, the shape of the solid electrolyte particle 104 and the shape of the positive electrode active material particle 106 are not particularly limited. The solid electrolyte particle 104 and the positive electrode active material particle 106 each typically have a spherical shape. The solid electrolyte particle 104 and the positive electrode active material particle 106 each may also have a different shape, such as a flake or a fiber.

In addition, the average particle diameter of the solid electrolyte particles 104 and that of the positive electrode active material particles 106 each indicate the particle diameter (D50) at a cumulative volume of 50% of a particle size distribution measured by a laser diffraction particle size meter. In addition, the average particle diameter may also be obtained in such a way that after the particle diameters (major axis) of particles (such as arbitrarily selected 10 particles) in a TEM image are actually measured, the average thereof is calculated. The value obtained by the latter method approximately coincides with the value obtained by the former method.

In the battery of the embodiment 4, as a negative electrode active material, metal indium or metal lithium may be used. Alternatively, as the negative electrode active material, a known negative electrode active material, such as a carbon material, Li₄Ti₅O₁₂, Si, SiO, Sn, or SnO, may also be used. As the carbon material, for example, graphite or hard carbon may be mentioned. When the negative electrode active material mentioned above is used, by mixing the negative electrode active material and a solid electrolyte, a negative electrode mixture can be obtained. In addition, as for the pressure for molding, when the negative electrode active material mentioned above is used, a large pressure must be applied as compared to the pressure to be applied when indium foil or lithium foil is used.

Fig. 5 is a view illustrating a process for manufacturing the power generation element 10.

In Fig. 5, a lower die 1, an upper die 2, an insulating pipe 3, insulating tubes 4, bolts 5, and nuts 6 are shown.

As shown in Fig. 5, the lower die 1 is inserted into the insulating pipe 3.

In the insulating pipe 3, the particles of the sulfide-based solid electrolyte containing Li₂S are received. The upper die 2 is inserted into the insulating pipe 3. The pressure is applied to the particles of the sulfide-based solid electrolyte, so that the solid electrolyte layer 102 is formed.

Next, the upper die 2 is removed. In the insulating pipe 3, the positive electrode mixture is received. The upper die 2 is again inserted into the insulating pipe 3. The pressure is applied to the positive electrode mixture, so that the positive electrode mixture layer 101 is formed on the solid electrolyte layer 102.

The pressure applied to the positive electrode mixture when the positive electrode mixture layer 101 is formed is preferably higher than the pressure applied to the solid electrolyte when the solid electrolyte layer 102 is formed. For example, when the solid electrolyte layer 102 is formed, a pressure of 0.2 to 5 MPa may be applied. When the positive electrode mixture layer 101 is formed, a pressure of 5 to 50 MPa may be applied.

After the positive electrode mixture layer 101 is formed, the lower die 1 is removed. Disc-shaped metal indium foil (or metal lithium foil) functioning as the negative electrode layer 103 is received in the insulating pipe 3. The lower die 1 is again inserted into the insulating pipe 3. The pressure is applied to the metal indium foil. Accordingly, the power generation element 10 is formed.

The pressure applied in this case is not particularly limited. However, the pressure is preferably applied so that the metal indium will not climb up along the interface between the insulating pipe 3 and the solid electrolyte layer 102. By the pressure as described above, short circuit can be suppressed.

The process for forming an all-solid lithium secondary battery is preferably performed in a low dew-point environment (such as an environment at a dew point of -40°C or less).

### Examples

Hereinafter, with reference to Examples and Comparative Examples, the present disclosure will be described in detail.

### (Example 1)

### - illustrative example

V₂O₅ was provided to cover 2 g of a commercially available NCA powder (NAT-7050, manufactured by Toda Kogyo Corporation, BET specific surface area: 0.41 m²/g).

As a vanadium source, vanadium (V) tri-i-propoxideoxide (VO(O-i-C₃H₇)₃) was used.

A reaction to obtain V₂O₅ from (VO(O-i-C₃H₇)₃) is represented by 2·(VO(O-i-C₃H₇)₃) → V₂O₅.

As the film thickness of V₂O₅, thicknesses of 3 nm, 7 nm, and 15 nm were targeted. Table 1 shows the sol compositions therefor.

**Table 1**

| Targeted film thickness | nm | 3 | 7 | 15 |
|---|---|---|---|---|
| Ethanol | mL | 1 | 1 | 1 |
| VO(O-i-C₃H₇)₃ | g | 0.0265 | 0.0618 | 0.1324 |

The density of V₂O₅ was set to 4.16 g/cc.

In this example, while the sol thus prepared was supplied by a syringe onto the NCA powder received in an agate mortar, mixing and drying were performed.

The NCA powder thus dried was placed in a glass-made sample bottle and was heated to 300°C over 1 hour in the air using an electric furnace, and a heat treatment was then performed for 1 hour at the same temperature as described above.

Subsequently, the furnace was cooled, so that NCA having a V₂O₅ covering layer was obtained.

### (Synthesis of Solid Electrolyte)

Lithium sulfide (Li₂S) in an amount of 4.073 g and phosphorus pentasulfide (P₂S₅) in an amount of 4.927 g (molar ratio: 80: 20) were weighed.

Those compounds were charged in a zirconia pot (inside volume: 45 mL) of a planetary ball mill (P-7 type, manufactured by Fritsch (Germany)), and milling was then performed at 510 rpm for 8 hours.

After the milling was performed, annealing was performed in an inert atmosphere at 270°C for 2 hours, so that a solid electrolyte was obtained.

The lithium ion conductivity of the solid electrolyte thus obtained was 8×10⁻⁴ S/cm.

### (Formation of All-Solid Lithium Secondary Battery)

The NCA powder covered with the vanadium compound of Example 1 and the above solid electrolyte powder were weighed at a weight ratio of 7: 3. Those compounds were sufficiently mixed together using an agate mortar to form a positive electrode mixture.

The solid electrolyte powder in an amount of 80 mg was charged into a battery container. Subsequently, this solid electrolyte powder was pre-molded at a pressure of 2 MPa. Next, 10 mg of the positive electrode mixture was charged onto the pre-molded solid electrolyte powder. Subsequently, the positive electrode mixture was molded at a pressure of 18 MPa.

Subsequently, metal indium foil (diameter: 10 mm, thickness: 200 µm) was inserted at a side facing the positive electrode mixture layer with the solid electrolyte layer provided therebetween. A pressure of 2 MPa was then applied to the metal indium foil, so that the positive electrode mixture layer, the solid electrolyte layer, and the metal indium foil were integrated together.

As a result, an all-solid lithium secondary battery of Example 1 was formed.

### (Example 2)

LiV₂O₅ was provided to cover 2 g of a commercially available NCA powder (NAT-7050, manufactured by Toda Kogyo Corporation, BET specific surface area: 0.41 m²/g).

As a vanadium source, vanadium (V) triethoxideoxide (VO(OC₂H₅)₃) was used.

A reaction to obtain LiV₂O₅ from LiOC₂H₅ and VO(OC₂H₅)₃ is represented by C₂H₅OLi + 2·VO(OC₂H₅)₃ → LiV₂O₅.

As the film thickness of LiV₂O₅, thicknesses of 3 nm, 7 nm, and 15 nm were targeted. Table 2 shows the sol compositions therefor.

**Table 2**

| Targeted film thickness | nm | 3 | 7 | 15 |
|---|---|---|---|---|
| Metal lithium | g | 0.0003 | 0.0007 | 0.0015 |
| Ethanol | mL | 1 | 1 | 1 |
| VO(OC₂H₅)₃ | g | 0.0177 | 0.0413 | 0.0885 |

The density of LiV₂O₅ was set to 3.36 g/cc.

The other operations were performed in a manner similar to those of the above Example 1.

As a result, an all-solid lithium secondary battery of Example 2 was formed.

### (Example 3)

### - illustrative example

Li₃V₆O₁₃ was provided to cover 2 g of a commercially available NCA powder (NAT-7050, manufactured by Toda Kogyo Corporation, BET specific surface area: 0.41 m²/g).

As a vanadium source, vanadium (V) triethoxideoxide (VO(OC₂H₅)₃) was used.

A reaction to obtain Li₃V₆O₁₃ from LiOC₂H₅ and VO(OC₂H₅)₃ is represented by 3·C₂H₅OLi + 6·VO(OC₂H₅)₃ → Li₃V₆O₁₃.

As the film thickness of Li₃V₆O₁₃, thicknesses of 3 nm, 7 nm, and 15 nm were targeted. Table 3 shows the sol compositions therefor.

**Table 3**

| Targeted film thickness | nm | 3 | 7 | 15 |
|---|---|---|---|---|
| Metal lithium | g | 0.0004 | 0.0009 | 0.0018 |
| Ethanol | mL | 1 | 1 | 1 |
| VO(OC₂H₅)₃ | g | 0.0214 | 0.0499 | 0.1069 |

The density of Li₃V₆O₁₃ was set to 3.83 g/cc.

The other operations were performed in a manner similar to those of the above Example 1.

As a result, an all-solid lithium secondary battery of Example 3 was formed.

### (Comparative Example 1)

A commercially available NCA powder (NAT-7050, manufactured by Toda Kogyo Corporation, BET specific surface area: 0.41 m²/g) was used without being covered.

The other operations were performed in a manner similar to those of the above Example 1.

As a result, an all-solid lithium secondary battery of Comparative Example 1 was formed.

### (Evaluation 1 of Electrochemical Characteristics)

The all-solid lithium secondary battery of each of Examples 1 and 2 and Comparative Example 1 was charged to a voltage of 3.7 V at a constant current of 70 µA (corresponding to 0.05 C). Subsequently, after a rest was taken for 20 minutes, discharge was performed to 1.85 V at a constant current of 70 µA. By the procedure described above, the initial charge/discharge characteristics were evaluated.

However, for the all-solid lithium secondary battery of Example 3, after a constant current charge at 0.3 C was performed, a constant voltage charge was started when the voltage reached 3.7 V, and a current corresponding to 0.05 C was set as the charge finish condition.

As for the discharge rate characteristics, after charge was performed to a voltage of 3.7 V at a constant current of 70 µA (corresponding to 0.05 C), a rest was taken for 20 minutes, and discharge was then performed at a constant current of 0.05 C, 0.1 C, 0.2 C, 0.3 C, 0.5 C, 1.0 C, and 2.0 C.

In Table 4, the evaluation results of the initial charge/discharge characteristics of Examples 1 to 3 and Comparative Example 1 are shown.

**Table 4**

| | Composition of covering layer | Thickness of covering layer nm | Initial charge capacity mAh/g | Initial discharge capacity mAh/g | Initial charge/discharge efficiency % |
|---|---|---|---|---|---|
| Example 1 | V₂O₅ | 3 | 194.9 | 149.1 | 76.5 |
| | V₂O₅ | 7 | 171.2 | 124.5 | 72.8 |
| | V₂O₅ | 15 | 142.2 | 92.2 | 64.8 |
| Example 2 | LiV₂O₅ | 3 | 209.7 | 150.8 | 71.9 |
| | LiV₂O₅ | 7 | 195.4 | 139.0 | 71.1 |
| | LiV₂O₅ | 15 | 181.8 | 127.2 | 70.0 |
| Example 3 | Li₃V₆O₁₃ | 3 | 198.2 | 147.7 | 74.5 |
| | Li₃V₆O₁₃ | 7 | 158.6 | 108.4 | 68.3 |
| | Li₃V₆O₁₃ | 15 | 115.7 | 95.2 | 82.2 |
| Comparative Example 1 | - | - | 183.3 | 120.1 | 65.5 |

In addition, the charge/discharge efficiency (%) was calculated by dividing the discharge electric quantity by the charge electric quantity.

In Example 1, it was found that compared to Comparative Example 1, the discharge capacity tended to be high when the thickness of the covering layer was 3 or 7 nm and that the initial charge capacity tended to be high when the thickness of the covering layer was 3 nm.

When the thickness of the covering layer of Example 2 was 3 nm or 7 nm, it was found that compared to Comparative Example 1, the charge capacity and the discharge capacity both tended to be high.

When the thickness of the covering layer of Example 3 was 3 nm, it was found that compared to Comparative Example 1, the charge capacity and the discharge capacity both tended to be high.

Table 5 shows the measurement results of the discharge rate characteristics of Comparative Example 1 and those of Examples 2 and 3 each obtained at a covering layer thickness of 3 nm at which the initial discharge capacity was maximized.

**Table 5**

| | Example 2 LiV₂O₅ Thickness of covering layer:3nm | Example 3 Li₃V₆O₁₃ Thickness of covering layer:3nm | Comparative Example 1 No covering layer |
|---|---|---|---|
| 0.05/0.05 | 100 | 100 | 100 |
| 0.1/0.05 | 94.6 | 96.4 | 89.5 |
| 0.2/0.05 | 88.6 | 90.5 | 79.9 |
| 0.3/0.05 | 83.5 | 85.7 | 71.8 |
| 0.5/0.05 | 76.1 | 78.6 | 57.3 |
| 1.0/0.05 | 62.4 | 64.2 | 11.9 |
| 2.0/0.05 | 11.8 | 19.7 | 0.004 |

The discharge rate characteristics were shown by the ratio of the discharge capacity at each discharge rate to the discharge capacity at 0.05 C which was regarded as100.

As shown in Table 5, it was found that at all the discharge rates, the characteristics obtained by using the NCA covered with LiV₂O₅ or Li₃V₆O₁₃ were improved as compared to those obtained by using the uncovered NCA of Comparative Example 1.

In particular, in Comparative Example 1 in which the uncovered NCA was used, discharge was hardly performed at 1C. On the other hand, it was found that in the case in which the covering was performed using LiV₂O₅ or Li₃V₆O₁₃, discharge could be performed even at 2 C.

### (Example 4)

As the solid electrolyte, a Li₂S-SiS₂-based solid electrolyte was used.

Synthesis of the Li₂S-SiS₂-based solid electrolyte was performed as described below.

First, lithium sulfide (Li₂S) in an amount of 3.849 g and silicon sulfide (SiS₂) in an amount of 5.151 g (molar ratio: 60: 40) were weighed.

Those compounds were charged in a zirconia pot (inside volume: 45 mL) of a planetary ball mill (P-7 type, manufactured by Fritsch (Germany)), and milling was performed at 510 rpm for 8 hours.

A Li₂S-SiS₂-based lithium ion conductive solid electrolyte was used without processed by a heat treatment.

The lithium ion conductivity of the solid electrolyte thus obtained was 7×10⁻⁴ S/cm.

Except that this solid electrolyte was used, an all-solid lithium secondary battery was formed in a manner similar to that of the above Example 2.

### (Comparative Example 2)

Except that the same Li₂S-SiS₂-based solid electrolyte as that of Example 4 was used, an all-solid lithium secondary battery was formed in a manner similar to that of the above Comparative Example 1.

### (Evaluation 2 of Electrochemical Characteristics)

By the use of the all-solid lithium secondary batteries of the above Example 4 and Comparative Example 2, evaluation similar to the evaluation 1 of the electrochemical characteristics was performed.

Table 6 shows the evaluation results of the initial charge/discharge characteristics of Example 4 and Comparative Example 2.

**Table 6**

| | Covering layer | Thickness of covering layer nm | Initial charge capacity mAh/g | Initial discharge capacity mAh/g | Initial charge/discharge efficiency % |
|---|---|---|---|---|---|
| Example 4 | LiV₂O₅ | 3 | 180 | 133 | 73.9 |
| | LiV₂O₅ | 7 | 175 | 117 | 66.9 |
| | LiV₂O₅ | 15 | 167 | 112 | 67.1 |
| Comparative Example 2 | - | - | 183 | 124 | 67.8 |

When covering was performed using LiV₂O₅ to have a thickness of 3 nm, it was found that compared to the case in which the covering was not performed, the discharge capacity and the charge/discharge efficiency were both high.

Hence, it was found that the covering effect could be obtained regardless of the type of solid electrolyte.

In addition, from the results shown in Tables 4 and 6, it was found that when the Li₂S-P₂S₅-based solid electrolyte was used, a more significant covering effect could be obtained as compared to that of the Li₂S-SiS₂-based solid electrolyte.

### (Example 5)

As the positive electrode active material, LCO (manufactured by Nichia Corp., D50: 16.7 µm, BET: 0.17 m²/g) was used.

A LiV₂O₅ covering treatment was performed on this positive electrode active material by an operation similar to that of the above Example 2. Table 7 shows the sol composition therefor.

**Table 7**

| Targeted film thickness | nm | 3 | 7 | 15 |
|---|---|---|---|---|
| Metal lithium | g | 0.00013 | 0.00029 | 0.00063 |
| Ethanol | mL | 1 | 1 | 1 |
| VO(OC₂H₅)₃ | g | 0.0073 | 0.0171 | 0.0367 |

Except that this positive electrode active material was used, an all-solid lithium secondary battery was formed in a manner similar to that of the above Example 2.

### (Comparative Example 3)

Except that the same positive electrode active material as that of the above Example 5 was used, an all-solid lithium secondary battery was formed in a manner similar to that of the above Comparative Example 1.

### (Evaluation 3 of Electrochemical Characteristics)

By the use of the all-solid lithium secondary batteries of the above Example 5 and Comparative Example 3, evaluation similar to the evaluation 1 of the electrochemical characteristics was performed.

Table 8 shows the evaluation results of the initial charge/discharge characteristics of Example 5 and Comparative Example 3.

**Table 8**

| | Covering layer | Thickness of covering layer nm | Initial charge capacity mAh/g | Initial discharge capacity mAh/g | Initial charge/discharge efficiency % |
|---|---|---|---|---|---|
| Example 5 | LiV₂O₅ | 3 | 127.5 | 105.5 | 83 |
| | LiV₂O₅ | 7 | 125.2 | 101.7 | 81 |
| | LiV₂O₅ | 15 | 126.4 | 100.1 | 79 |
| Comparative Example 3 | - | - | 121.1 | 99.3 | 82 |

It was found that in Example 5, at a covering layer thickness of 3 to 15 nm, the charge capacity and the discharge capacity were high as compared to the case of Comparative Example 3 in which the covering was not performed.

In addition, it was confirmed that the covering effect by a vanadium-based compound could also be obtained even when an active material other than NCA was used.

In addition, in the above Examples, the cases using V₂O₅ and LIV₂O₅ were described by way of example. V₂O₅ is a material used as an active material of a lithium secondary battery. When V₂O₅ is discharged, LiV₂O₅ is obtained. Hence, from the phenomenon described above, it is found that even by LiₓV₂O₅ (0<x≤1), an effect similar to that described above can be obtained.

In addition, in the above Example, the case using Li₃V₆O₁₃ was described by way of example. V₆O₁₃ is a material used as an active material of a lithium secondary battery. When V₆O₁₃ is discharged, Li₃V₆O₁₃ is obtained. Furthermore, in consideration of the relationship between the above V₂O₅ and LiV₂O₅, it is found that even by Li_{y}V₆O₁₃ (0≤y≤3), an effect similar to that described above can be obtained.

The positive electrode material of the present disclosure may be preferably used as a positive electrode material of a battery, such as an all-solid secondary battery.

While the present disclosure has been described with respect to exemplary embodiments thereof, it will be apparent to those skilled in the art that the disclosure may be modified in numerous ways and may assume many embodiments other than those specifically described above. Accordingly, it is intended by the appended claims to cover all modifications of the disclosure that fall within the scope of the disclosure.

## Claims

1. A positive electrode material (2000) comprising:
a positive electrode active material particle (106); and
a covering layer (105, 2105) covering the positive electrode active material particle (106),
wherein the positive electrode active material particle (106) contains a transition metal oxide which absorbs and releases a lithium ion, and
the covering layer (105, 2105) is a layer containing a compound represented by the general formula of LiₓV₂O₅ (where 0<x≤1 holds).

2. The positive electrode material (2000) according to Claim 1,
wherein the covering layer (105, 2105) is a layer containing a compound represented by the general formula of Li₁V₂O₅.

3. The positive electrode material (2000) according to Claim 1,
wherein the covering layer (105, 2105) is a layer substantially formed of only a compound represented by the general formula of LiₓV₂O₅ (where 0<x≤1 holds).

4. The positive electrode material (2000) according to Claim 3,
wherein the covering layer (105, 2105) is a layer substantially formed of only a compound represented by the general formula of Li₁V₂O₅.

5. A battery (10) comprising:
a positive electrode (101) containing the positive electrode material (2000) according to Claim 1;
a negative electrode (103); and
a solid electrolyte (102),
wherein the solid electrolyte (102) is provided between the positive electrode (101) and the negative electrode (103), and
the covering layer (105, 2105) is in contact with the solid electrolyte (102).

6. The battery (10) according to Claim 5,
wherein the solid electrolyte (102) contains lithium and sulfur.

7. The battery (10) according to Claim 6,
wherein the solid electrolyte (102) contains Li₂S and P₂S₅.

## Patentansprüche

1. Positivelektrodenmaterial (2000), mit:
einem Positivelektrodenaktivmaterialpartikel (106) und
einer Deckschicht (105, 2105), die das Positivelektrodenaktivmaterialpartikel (106) bedeckt,
wobei das Positivelektrodenaktivmaterialpartikel (106) ein Übergangsmetalloxid enthält, das ein Lithium-Ion absorbiert und freigibt, und
die Deckschicht (105, 2105) eine Schicht ist, die eine Verbindung enthält, die durch die allgemeine Formel von LiₓV₂O₅ (mit 0 < x ≤ 1) dargestellt wird.

2. Positivelektrodenmaterial (2000) nach Anspruch 1,
wobei die Deckschicht (105, 2105) eine Schicht ist, die eine Verbindung enthält, die durch die allgemeine Formel von Li₁V₂O₅ dargestellt wird.

3. Positivelektrodenmaterial (2000) nach Anspruch 1,
wobei die Deckschicht (105, 2105) eine Schicht ist, die im Wesentlichen nur aus einer Verbindung gebildet ist, die durch die allgemeine Formel von LiₓV₂O₅ (mit 0 < x ≤ 1) dargestellt wird.

4. Positivelektrodenmaterial (2000) nach Anspruch 3,
wobei die Deckschicht (105, 2105) eine Schicht ist, die im Wesentlichen nur aus einer Verbindung gebildet ist, die durch die allgemeine Formel von Li₁V₂O₅ dargestellt wird.

5. Batterie (10), mit:
einer Positivelektrode (101) mit dem Positivelektrodenmaterial (2000) nach Anspruch 1,
einer Negativelektrode (103) und
einem festen Elektrolyt (102),
wobei das feste Elektrolyt (102) zwischen der Positivelektrode (101) und der Negativelektrode (103) vorgesehen ist, und
die Deckschicht (105, 2105) in Kontakt mit dem festen Elektrolyt (102) steht.

6. Batterie (10) nach Anspruch 5,
wobei das feste Elektrolyt (102) Lithium und Schwefel enthält.

7. Batterie (10) nach Anspruch 6,
wobei das feste Elektrolyt (102) Li₂S und P₂S₅ enthält.

## Revendications

1. Matériau d'électrode positive (2000) comprenant:
une particule de matériau actif d'électrode positive (106) et
une couche de recouvrement (105, 2105) recouvrant la particule de matériau actif d'électrode positive (106),
dans lequel la particule de matériau actif d'électrode positive (106) contient un oxyde de métal de transition qui absorbe et libère un ion de lithium, et
la couche de recouvrement (105 2105) est une couche contenant un composé représenté par la formule générale de LiₓV₂O₅ (avec 0 < x ≤ 1).

2. Matériau d'électrode positive (2000) selon la revendication 1,
dans lequel la couche de recouvrement (105, 2105) est une couche contenant un composé représenté par la formule générale de Li₁V₂O₅.

3. Matériau d'électrode positive (2000) selon la revendication 1,
dans lequel la couche de recouvrement (105, 2105) est une couche formée pour l'essentiel d'un seul composé représenté par la formule générale de LiₓV₂O₅ (avec 0 < x ≤ 1).

4. Matériau d'électrode positive (2000) selon la revendication 3,
dans lequel la couche de recouvrement (105, 2105) est une couche formée pour l'essentiel d'un seul composé représenté par la formule générale de Li₁V₂O₅.

5. Batterie (10) comprenant:
une électrode positive (101) contenant le matériau d'électrode positive (2000) selon la revendication 1,
une électrode négative (103) et
un électrolyte solide (102),
dans laquelle l'électrolyte solide (102) est prévu entre l'électrode positive (101) et l'électrode négative (103), et
la couche de recouvrement (105, 2105) est en contact avec l'électrolyte solide (102).

6. Batterie (10) selon la revendication 5,
dans laquelle l'électrolyte solide (102) contient du lithium et du soufre.

7. Batterie (10) selon la revendication 6,
dans laquelle l'électrolyte solide (102) contient du Li₂S et du P₂S₅.
